# EUROPEAN PATENT APPLICATION

(11) **EP 0 809 055 A1**
(43) Date of publication of application: **26.11.1997**
(21) Application number: 97108017.1
(22) Date of filing: 16.05.1997
(51) Int. Cl.: F16K 5/06, B01D 35/04

(54) **Strainer and method for making a strainer**

(30) Priority: 22.05.1996 DK 595/96
(71) Applicant: BROEN ARMATUR A/S, DK-5610 Assens (DK)
(72) Inventor: Mads Lildholdt, DK - 5610 Essens (DK)
(74) Representative: Nielsen, Leif

(57) **Abstract**

A strainer (1) is described, which is preferably intended for use in a filter valve (35). The strainer (1) is composed of a metal wire basket (2) and an annular support (3) extending around the basket opening (6). A cross rib (4) extends diametrically within the annular support (3). The support (3) and the cross rib (4) are produced in one piece of plastic, which is moulded together with the edge area (5) of the wire basket (2) during moulding.

The strainer may be produced by moulding when a split core is used with two mould halves (20, 21) arranged inside the strainer and co-operating with a third mould part (22) for the formation of the moulding tracks (23, 24). Prior to moulding the wire basket is positioned in the mould. When unmoulding, the two halves of the split mould are displaced at an acute angle (30). This is possible when at least part of the opposite sides (7, 8) of the cross rib (4) extends at an acute angle corresponding to the angle of displacement of the mould halves.

## Description

The present invention relates to a strainer, preferably for a filter valve, and of the type having a metal wire basket, which has an annular support around the opening of the basket, and wherein a cross rib extends diametrically within the annular support. The invention further relates to a method of producing a strainer, preferably for a filter valve, and of the type having a metal wire basket, which is provided with an annular support around the opening of the basket, and wherein a cross rib extends diametrically within the annular support.

In most applications of strainers it will be difficult to remove and reinsert them. This will often only be possible to do by using tools. Strainers placed in pipe installations, fittings, filter valves, stopvalves etc. will often be positioned in a fixed installation where the access opening has a relatively large depth and a small diameter. Removing a strainer for emptying or replacement may also be difficult due to its having been in use for a relatively long time and due to sediments present in and around the support. This may mean that relatively much force has to be applied in order to remove the strainer. Therefore, it is important that the strainer is provided with a diametrically extending cross rib, which may be gripped by a tool. Using such a cross rib, it will be possible to remove the strainer by pointed tongs, and there will be little risk of damaging the metal wire basket. If the metal wire basket is damaged, the strainer will be useless.

It is known to produce strainers exclusively of plastic. However, such strainers are disadvantageous for certain applications as they cause a large flow resistance and consequently a large pressure drop. Strainers of this type will consequently be unfit for pipe installations with high flow, which is the case e.g. in filter valves or in water supply channels for installations consuming water such as washing machines and dishwashers.

In applications where the least possible flow resistance through a strainer is desired, it is preferred to use a metal wire basket. The metal wire baskets are provided with a support making it possible to place the wire baskets in a water supply conduit, a fitting or in a filter valve. In order to remove the strainer from its position it is known to provide it with a cross rib extending diametrically within the annular support. This makes it possible either by a tool or by the fingers to draw out the strainer by seizing the cross rib.

An example of a strainer of the type mentioned in the introduction is known e.g. from the description of French patent No. 1,333,860. That strainer, however, is very expensive to produce since wire basket, support and cross ribs are produced separately. Then the strainer is produced by mounting these elements.

Strainers in which the metal wire basket is provided with an annular support of plastic are also known. Such a structure is not suitable, however, since there is a high risk of damaging the metal wire basket when the strainer is removed by a tool, which a person tries to bring into contact with the support alone. A strainer of this type is difficult to remove.

It is the object of the present invention to disclose a strainer that remedies the disadvantages of known strainers, and which is simple and easy to manufacture, and which makes it possible to remove and reinsert the strainer without any risk of damaging the metal wire basket.

This is obtained by the present invention by a strainer of the type mentioned in the introduction, which is characterised in that the support and the cross rib are manufactured in one piece from plastic, which is moulded together with the edge area of the wire basket around the opening.

According to the invention a strainer is produced by a method of the type mentioned in the introduction, which is characterised in that the support is produced by plastic moulding, that for the moulding a split core with two mould halves is used, which cooperate with a third mould part to form a substantially annular moulding track and a diametrically extending moulding track, and that when unmoulding the two mould halves of the split mould are displaced at an acute angle in relation to a separation plane between the two mould halves, which separation plane is positioned substantially perpendicularly to a plane in which the moulding tracks are found.

As the support and the cross rib are produced in one piece of plastic, the strainer will only consist of two elements, each of them inexpensive in production. As plastic material is moulded together with the edge area of the wire basket, a secure connection between the two elements is obtained so that the strainer will not be damaged. Removal from an application position may take place by a tool that is brought into contact with the cross rib. A strainer of this type gives little resistance to flow through the wire basket and will consequently have many fields of application. One important application is in a filter valve and preferably of a type used as both a filter valve and a stop valve in a pipe installation.

It is possible to produce the annular support of the strainer and the diametrically extending cross rib in one piece by the method according to the invention. Using a split core having two mould halves, which, during unmoulding, are displaced at an acute angle in relation to a separation plane, it is possible to withdraw the moulding tools after moulding of the support and the cross rib. Such an oblique withdrawal of the two split core moulding halves, which are situated within the metal wire basket during moulding, will be possible when the cross rib and the support are produced with oblique lateral edges corresponding to the acute angle at which the moulding halves are withdrawn.

Thus, by the method according to the invention it is possible to mould the support directly around the edge area of the wire basket and simultaneously form a cross rib, which is integrated with the support. Thus, there will be no need for any subsequent mounting. The strainer will be ready for use when it has left the mould.

The invention will now be explained in further detail with reference to the accompanying drawing, wherein
- Fig. 1: shows a cross section through a strainer according to the invention,
- Fig. 2: shows a picture of the strainer shown in Fig. 1, seen according the arrows II-II,
- Fig. 3: a partial cross section according to the line III-III in Fig. 1,
- Fig. 4: a partial view of a cross section to illustrate a method according to the invention,
- Fig. 5: a longitudinal cross section through a strainer according to the invention applied in a filter valve, and
- Fig. 6: a cross section through the valve in Fig. 5 according to the plane VI-VI.

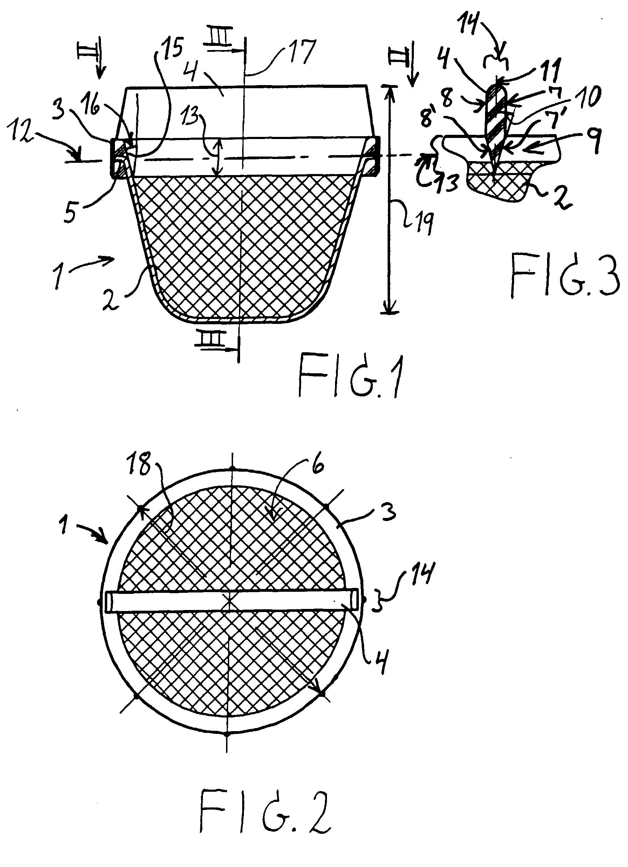

Fig. 1 shows a strainer 1 consisting of a metal wire basket 2 with an annular support 3 as well as a cross rib 4 extending diametrically within it. The support 3 and the cross rib 4 are produced in one piece of plastic. The edge area 5 of the wire basket is bent so that it extends in a plane substantially parallel to a plane 12 containing the support 3 and the cross rib 4. This edge area 5 is moulded together with the support 3 around an opening 6 of the wire basket 2. In the embodiment shown the wire basket 2 has the shape of a truncated cone. However, other embodiments of the strainer 2 will be possible.

It is seen clearly from Fig. 3 that the cross rib 4 has two opposite sides 7, 8. At the lower part 9 of the cross rib these opposite sides 7', 8' extend at an acute angle 10 in relation to a middle plane 11, which contains the cross rib 4 and which is perpendicular to the plane 12 containing the support 3 and the cross rib 4.

The obliquely extending parts 7', 8' have en extension in the direction of the median plane that substantially corresponds to the height 13 of the support 3. The upper parts of the opposite sides 7, 8 extend substantially parallel with each other and parallel with the median plane 11. Alternatively the opposite sides 7, 8 could extend at the acute angle 10 throughout their extension. In order to obtain the least possible flow resistance through the strainer 1, however, it is preferred for the cross rib 4 to have as little thickness 14 in a direction perpendicular to the median plane 11. This means as little extension as possible in the flow channel since liquid will flow through the wire basket 2 in a direction parallel to the plane 11 and downward, such as seen in Figs. 1 and 3.

The inner side 15 of the support 3 also extends at an acute angle 16 in relation to the median plane 11 and a central axis 17 through the strainer 1. The acute angles 10 and 16 may have different sizes as long as it is secured that unmoulding may take place such as explained later.

The dimensions of a strainer 1 according to the invention may vary within very wide limits. However, the acute angles 10, 16 will be between 5° and 30°, preferably between 13° and 17°. In the embodiment shown the acute angles 10 and 16 are 15°. The strainer 1 may have an outer diameter 18 between 5 mm and 50 mm, preferably between 7 mm and 15 mm, and a height 19 between 5 mm and 50 mm, preferably between 7 and 15 mm. A strainer with dimensions within this scope will fit into a filter valve inserted into the most common water installations.

A strainer of the type discussed above is produced by a method that is illustrated in Fig. 4. The support 3 and the cross rib 4 are produced in one piece by plastic moulding. A split core with two mould halves 20, 21 is used for moulding. These two mould halves 20, 21 co-operate with a third mould part 22 to form a substantially annular track 23 and a diametrically extending moulding track 24 formed by recesses 25 in the two mould halves 20, 21 of the split core. The recesses 25 are formed in a lateral surface 26 of the mould halves 20, 21, which is designed to be positioned in a separation plane 27 between the two mould halves 20, 21 when the mould is closed.

In the right side of Fig. 4 a closed mould is illustrated and in the left side an open mould is illustrated. It is also illustrated that the mould is opened by an oblique displacement of each mould half 20, 21 of the split core in the direction of an arrow 29 (the corresponding displacement is not shown in the right side). The displacement takes place at an angle 30 in relation to the separation plane 27, which is substantially perpendicular to a plane 28 containing the moulding tracks 23, 24. The acute angle 30 of the displacement of the mould halves 20, 21 is identical to the acute angles 10, 16 in the strainer. It is consequently possible to perform an unmoulding and displace the mould halves 20, 21 out of the inside of the strainer 2.

The bent lateral edge 5 of the strainer is placed substantially in the middle of the annular moulding track 23 so that it will be completely embedded in the finished product. The wire basket 2 is placed in the third mould part 22 with a peripheral area 31 contacting contact surfaces 32 on the third mould part 22. In the closed mould the mould halves 20, 21 are displaced into the wire basket 2 so that the outer end areas 33 of the mould halves 20, 21 have an edge area 34, which is brought into contact with the peripheral area 31 of the wire basket, which is positioned at the contact areas 32 on the third mould part. In this manner the wire basket is held tightly between the mould parts 20-22, and plastic may be injected into the moulding tracks 23, 24.

In the embodiment shown the acute angles 10, 16 and 30 are identical. It will be possible to vary the angles 10, 16 compared to the angle 30, but it just has to be ensured that negative release angles will not appear when the mould halves 20, 21 are withdrawn.

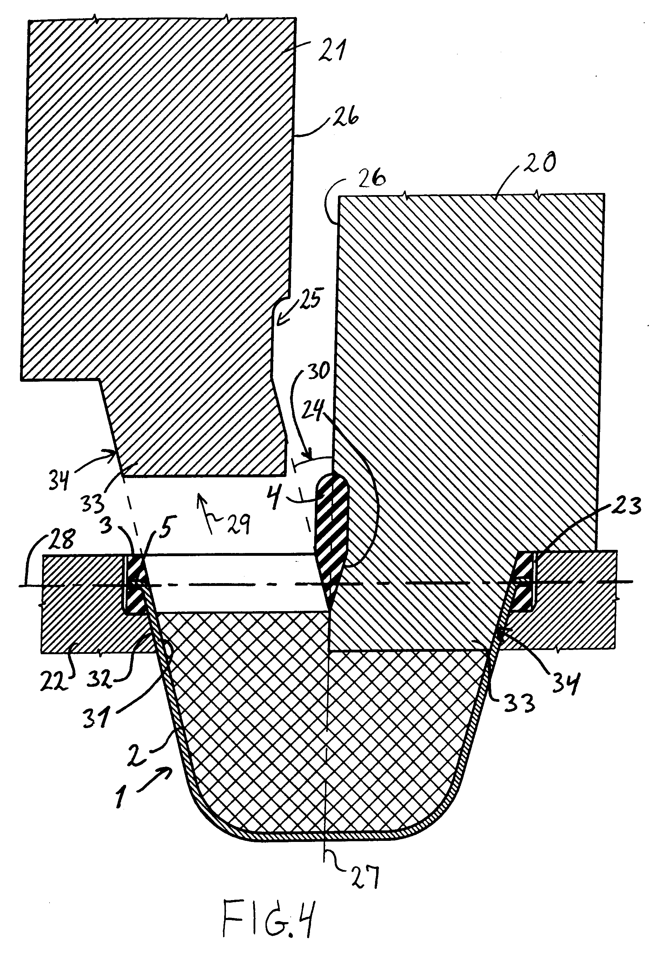

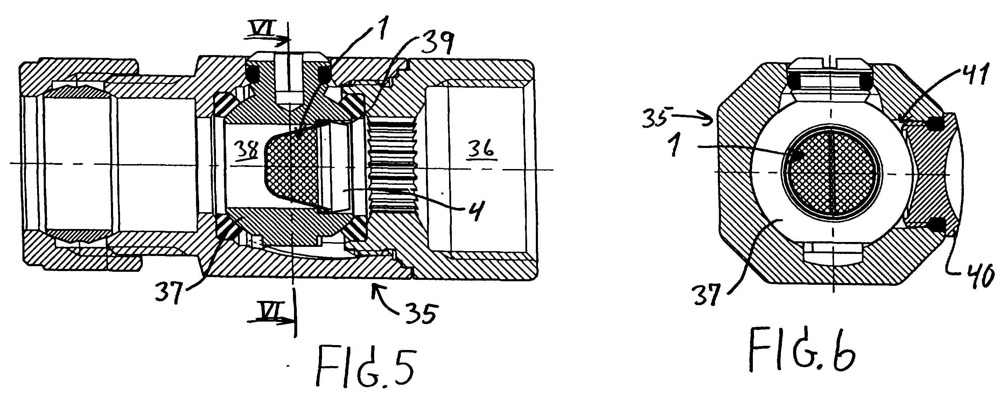

Figs. 5 and 6 illustrate a strainer 1 according to the invention. The strainer 1 is positioned in a filter valve 35. The filter valve 35 is formed as a stop valve with a flow channel 36. The flow channel 36 may be blocked by a ball-shaped valve member 37 supplied with a through-going bore 38. The strainer 1 is placed in the valve member 37 in a recess 39 having a slightly larger diameter than the bore 38. The valve member 37 may be rotated with the bore 38 in transverse direction of the flow channel 36, whereby the strainer may be removed after unscrewing a cap 40 covering a lateral opening 41 in the filter valve 35. When the valve member 37 is placed in this position, the strainer 1 may be removed and inserted without medium flowing out of the pipe system in which the filter valve 35 is mounted. Using ordinary flat-nose pliers with pointed jaws it will be possible to remove the strainer by seizing the cross rib 4 by the pliers.

## Claims

1. A strainer, preferably for a filter valve, and of the type having a metal wire basket, which has an annular support around the opening of the basket, and wherein a cross rib extends diametrically within the annular support, **characterised** in that the support and the cross rib are manufactured in one piece from plastic, which is moulded together with the edge area of the wire basket around the opening.

2. A strainer according to claim 1, **characterised** in that at least part of the opposite sides of the cross rib and at least part of the inner side of the annular support extend at an acute angle in relation to a central plane, which contains the rib and is perpendicular to a plane containing the support and the cross rib.

3. A strainer according to claim 2, **characterised** in that the lower part of the opposite sides of the cross rib extend at said acute angle.

4. A strainer according to any one of the preceding claims, **characterised** in that an edge area surrounding the opening of the wire basket is bent at such an angle that this part extends in a plane substantially parallel to the plane containing the support and the cross rib.

5. A strainer according to any one of the preceding claims, **characterised** in that it has an outer diameter of between 5 and 50 mm, preferably between 7 and 15 mm, and a height of between 5 and 50 mm, preferably between 7 and 15 mm.

6. A strainer according to any one of the preceding claims, **characterised** in that the acute angle is between 5° and 30°, preferably between 13° and 17°.

7. A method of producing a strainer, preferably for a filter valve, and of the type having a metal wire basket, which is provided with an annular support around the opening of the basket, and wherein a cross rib extends diametrically within the annular support, **characterised** in that the support is produced by plastic moulding, that for the moulding a split core with two mould halves is used, which co-operate with a third mould part to form a substantially annular moulding track and a diametrically extending moulding track, and that when unmoulding the two mould halves of the split mould are displaced at an acute angle in relation to a separation plane between the two mould halves, which separation plane is positioned substantially perpendicularly to a plane in which the moulding tracks are found.

8. A method according to claim 7, **characterised** in that the wire basket is inserted into the mould as a bent lateral edge surrounding the wire basket opening being positioned in the annular moulding track, and that the plastic is subsequently injected into the moulding tracks.

9. A method according to claim 8, **characterised** in that the wire basket is placed with a peripheral area in contact with contact areas on the third mould part, and that, when closing the mould, the two mould halves of the split core are displaced into the wire basket so that the outer end areas of the mould halves are brought into contact with the wire basket at said peripheral area pressing the wire basket tightly between the mould parts.

10. A use of a strainer defined by any one of the preceding claims as a strainer in a ball type stop valve, wherein the filter may be removed from and inserted into the ball member of the valve through a lateral opening when the ball member is turned transversely of the flow channel of the stop valve.
